# EUROPEAN PATENT SPECIFICATION

(11) **EP 1 584 702 B1**
(45) Date of publication and mention of the grant of the patent: **19.01.2011**
(21) Application number: 05252127.5
(22) Date of filing: 05.04.2005
(51) Int. Cl.: C23C 4/02, C23C 14/04, B23P 6/00, F01D 5/00

(54) **Deposition repair of hollow items**
Abscheidungsreparatur von hohlen Gegenständen
Procédé de dépôt pour la réparation d'articles creux

(30) Priority: 06.04.2004 US 818962
(43) Date of publication of application: 12.10.2005
(73) Proprietor: United Technologies Corporation, Hartford, CT 06101 (US)
(72) Inventor: Topal, Valeriy I., 02098 Kiev (UA)
(74) Representative: Taylor, Adam David

(56) References cited:
- EP-A- 0 253 754
- EP-A- 1 350 860
- EP-A- 1 505 168
- US-A- 3 576 065
- US-A- 5 511 721
- US-A1- 2001 007 708
- US-B1- 6 547 210

## Description

Copending US patent applications US 2004172824, filed March 3, 2003, and entitled "Fan and Compressor Blade Dovetail Restoration Process", US2004/72825, filed August 5, 2003, and entitled "Turbine Element Repair", US 2004172826, filed December 12, 2003, and entitled "Turbine Element Repair" , and US 2005205415 filed March 19, 2004 and entitled "Multi-Component Deposition" disclose apparatus and methods to which the present invention may be applied.

The invention relates to the restoration of turbomachine parts. More particularly, the invention relates to the restoration of worn or damaged gas turbine engine fan, compressor and turbine blades and vanes made of nickel-, cobalt-, iron-, or titanium-based superalloys.

The components of gas turbine engines are subject to wear and damage. Even moderate wear and damage of certain components may interfere with optimal operation of the engine. Particular areas of concern involve the airfoils of various blades and vanes. Wear and damage may interfere with their aerodynamic efficiency, produce dynamic force imbalances, and even structurally compromise the worn/damaged parts in more extreme cases. A limited reconditioning is commonly practiced for slightly worn or damaged airfoils wherein additional material is removed below the wear/damage to provide the airfoil with a relatively efficient and clean sectional profile albeit smaller than the original or prior profile. Exemplary inspection criteria establishing the limits to which such reconditioning can be made are shown in Pratt & Whitney JT8D Engine Manual (P/N 773128), ATA 72-33-21, Inspection-01, United Technologies Corp., East Hartford Connecticut. Such limits may differ among airfoils depending upon the location and particular application. The limits are typically based on structural and performance considerations which limit the amount of material that may be removed.

Various techniques have been proposed for more extensive restoration of worn or damaged parts of gas turbine engines. U.S. Patent No. 4,822,248 discloses use of a plasma torch to deposit nickel- or cobalt-based superalloy material. U.S. Patent No. 5,732,467 identifies the use of high velocity oxy-fuel (HVOF) and low pressure plasma spray (LPPS) techniques for repairing cracks in such turbine elements. U.S. Patent No. 5,783,318 also identifies LPPS techniques in addition to laser welding and plasma transferred are welding. U.S. Patent No. 6,049,978 identifies further use of HVOF techniques. Such techniques have offered a limited ability to build up replacement material to restore an original or near original cross-section. However, the structural properties of the replacement material may be substantially limited relative to those of the base material.

Especially for larger damage, it is known to use preformed inserts which may be welded in place to repair damage. With such inserts, the damaged area is cut away to the predetermined shape of the insert which is, in turn, welded in place. Most advanced turbine alloys are difficult to weld by conventional means. Conventional welding results in cracks. There have been developments of specialized techniques using elevated temperature or special materials to address such cracking. U.S. Patent No.5,106,010 identifies one temperature-controlled welding process. Brazing may alternatively be used, but brazing may greatly reduce the temperature capability of the component. Neither brazing nor welding works well for regions of components that see both relatively high temperature and stress.

Accordingly, there remains room for improvement in the art.

US-A-5511721 and US 2001/007708 disclose methods as in the preamble of claim 1.

One aspect of the invention provides a method for restoring a component according to claim 1. The deposited repair material may, in major part, replace the first material. The component may be an internally-cooled gas turbine engine turbine section element. The repair material may be selected from the group consisting of Ni-, Co-, Fe-, or Ti-based superalloys. The component may be a blade having an airfoil and the damage site may be along a leading edge of the airfoil or a tip of the airfoil. The first material maybe lost to a depth of at least 2.0 mm. The depositing may involve at least one of: plasma spray deposition; high velocity oxy-fucl deposition; low pressure plasma spray deposition; and electron beam physical vapor deposition. Deposited repair material may be machined to restore an external contour of the airfoil. The placing may involve forming in situ or trimming a pre-formed insert. The removing may involve at least one of chemically removing and thermally removing.

Another aspect of the invention provides a sacrificial insert for restoring a turbine airfoil element according to claim 20 having an internal space comprising: a first surface portion for registering the insert with an intact internal surface of the turbine airfoil element; and a second surface portion having a shape effective to re-form an internal surface portion of the element bounding the internal space; **characterised in that** the insert is arranged such that the second surface portion at least partially protrudes from an intact portion of the turbine airfoil element when, in use, the first surface portion is registered with the intact internal surface.

In various implementations, the insert may consist essentially of one or more salts or of one or more ceramics. The insert may consist in major part of one or more salts selected from the group consisting of chlorides and fluorides. The insert may consist in major part of alumina. The first and second surface portions may include associated portions of pressure and suction side faces of the insert and may define surface enhancements to be replaced/restored.

Other features, objects, and advantages of the invention will be apparent from the description and drawings, and from the claims.

Preferred embodiments of the invention will now be described by way of example only and with reference to the accompanying drawings in which:
FIG. 1 is a view of a turbine blade of a gas turbine engine.
FIG. 2 is a chordwise sectional view of the airfoil of the blade of FIG. 1.
FIG. 3 is a median sectional view of a tip portion of the airfoil of the blade of FIG. 1.
FIG. 4 is a sectional view of the airfoil of FIG. 2 upon damage.
FIG. 5 is a sectional view of the airfoil of FIG. 3 during repair.
FIG. 6 is a sectional view of the airfoil of FIG. 5 after repair.
FIG. 7 is a sectional view of the airfoil of FIG. 3 upon damage.
FIG. 8 is a sectional view of the airfoil of FIG. 7 in an intermediate stage of repair.
FIG. 9 is a sectional view of the airfoil of FIG. 8 in a subsequent stage of repair.
FIG. 10 is a sectional view of the airfoil of FIG. 9 after repair.
Like reference numbers and designations in the various drawings indicate like elements.

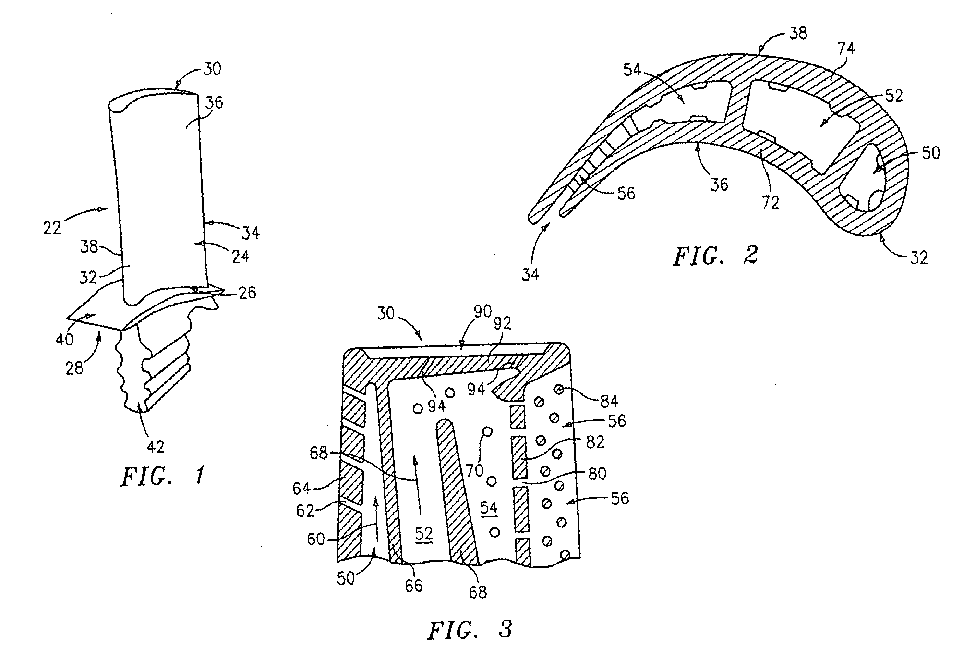

FIG. 1 shows a turbine element (e.g., a gas turbine engine turbine section blade 22). The exemplary blade 22 includes an airfoil 24 extending from a root 26 at a platform 28 to a tip 30. The airfoil has leading and trailing edges 32 and 34 separating pressure and suction sides 36 and 38. The platform has an outboard portion 40 for forming an inboard boundary/wall of a core flowpath through the turbine engine. A mounting portion or blade root 42 depends centrally from the underside of the platform 40 for fixing the blade in a disk of the turbine engine. Optionally, all or some portion (e.g., the platform 40 and airfoil 24) may be coated. A cooling passageway network (not shown in FIG. 1) may extend through the blade from one or more inlets in the root to multiple outlets along the blade sides, edges, tip, and/or root. Exemplary blades may be made from nickel- or cobalt-based superalloys.

FIG. 2 shows portions of the cooling passageway network. The illustrated blade and network are illustrative. Those skilled in the art will recognize that other component envelope and passageway configurations are possible. The network includes a leading passageway or cavity 50, a second cavity 52 aft thereof, a third cavity 54 aft thereof, and a fourth cavity or trailing edge slot 56 yet further aft FIG. 3 shows an implementation wherein the leading cavity 50 directs a cooling flow 60 from inboard to outboard and incrementally exiting through a spanwise series of leading edge cooling outlet passageways 62 in a leading edge wall portion 64. The second cavity 52 is separated from the leading cavity 50 by a wall portion 66. The exemplary second and third cavities are legs of a single passageway separated by a wall portion 68, with the second cavity 52 carrying a flow 68 in an outboard direction and the third cavity 54 returning the flow in an inboard direction. The second and third cavities may contain pedestal stubs 70 or other surface enhancements extending from pressure and suction side surfaces of respective pressure and suction side wall portions 72 and 74 (FIG. 2). Alternatively or additionally, pedestals (not shown) may extend between the sides. The inboard flow through the third cavity 54 incrementally exits aft through apertures 80 in a wall 82 dividing the third cavity from the slot 56. The slot 56 extends to the trailing edge and has a number of pedestals 84 extending between pressure and suction side surfaces of the respective pressure and suction side wall portions. In the exemplary embodiment, the tip 30 has a tip cavity or pocket 90 separated from the internal cavities by a wall 92 and having outlet passageways 94 therein for venting air from the flow 68.

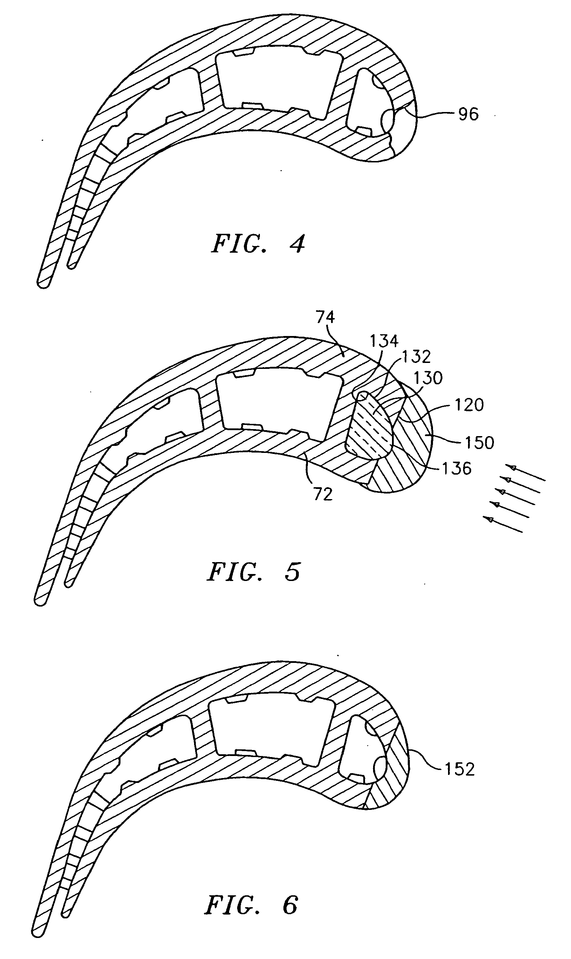

FIG. 4 shows localized damage such as is associated with foreign object damage (FOD) nicking or chipping the airfoil proximate the leading edge to create a damaged leading portion penetrating to and exposing the leading cavity 50. The exemplary damaged surface 96 includes portions along leading portions of the walls 72 and 74. In addition or alternative to FOD, the airfoil may be subject to more general damage such as wear or erosion. Even when the damage itself does not penetrate the leading cavity, the penetration may be close enough to the leading cavity that repair attempts may penetrate the cavity. For example, it may be desired to true damage surfaces prior to repair as is described in US patent application US 2004172825. Such truing may penetrate the cavity.

According to the invention, repair material may be deposited in association with a cavity or other part internal space. The damage site is advantageously cleaned of contamination. Protective coatings may be locally or globally removed. Further removal of base material may provide an advantageous base surface for receiving deposition. In the exemplary restoration procedure, after the damage/wear, the remaining base material of the blade is ground to a preset configuration such as providing an angled leading facet or base surface 120 (FIG. 5). The exemplary base surface 120 has portions on opposite sides of an exposed opening to the leading cavity (e.g., portions along the pressure and suction side wall portions 72 and 74). A sacrificial element 130 is placed within the leading cavity. An exemplary sacrificial element is formed in situ by injecting a flowable material into the cavity and permitting the material to harden. Exemplary material is an aqueous paste (e.g., a salt-based filler compound) which dries in place. Advantageous composition of the filler compounds and advantageous filling techniques, as well as subsequent removal techniques (described below), may depend upon the part material and the cavity shape and dimensions. In some cases filler material may be applied by spraying (e.g., gas plasma, plasma, etc.). In other cases, for instance when narrow and deep hollow passageways are filled, a slip casting process may be used. A slip is a liquid suspension and/or solution containing particulate matter. The opening at the damage site may be plugged or covered (e.g., via a tape mask) to locally close the cavity. The liquid may then be introduced to the cavity (e.g., via pouring through the root of a blade). As the liquid evaporates, the particulate is left behind forming a crust on the surface of the cavity. Additives may give the crust enhanced structural integrity if the flocculated particles don't have sufficient structural integrity themselves. This crust can be baked at a low temperature to obtain the structural integrity if needed. The plug/cap/mask may be removed.

Chlorides and fluorides or their mixtures may be used that sublimate upon heating above a sublimation temperature under vacuum. This permits their removal (described below) via sublimation. Salts and other compounds soluble in water, acids, or sodium solutions could be used for removal via dissolving and/or chemical reaction. In exemplary repair of Ni-based superalloy components having narrow cavities, sublimable materials may be advantageous due to limited exposed surface area for dissolving. Sodium fluoride will start to sublimate in the vicinity of 850C; magnesium fluoride at 980C; and a double salt of sodium fluoride and magnesium fluoride at 900C. For Ti-based superalloys lithium fluoride may advantageously be used due to a lower sublimation temperature in the vicinity of 750C. For Co-based superalloys sodium chloride may advantageously be used due to either its ease of dissolving in water or its much lower sublimation temperature in the vicinity of 700C.

In the exemplary embodiment, the element 130 has an exterior surface with a portion 132 contacting an intact portion of a cavity-defining surface 134 and a portion 136 exposed. The portion 136 advantageously complements the lost portion of the cavity-defining surface and protrudes beyond an opening in the damaged cavity. For example, the protrusion may be sculpted to have the desired shape. Optionally, the sacrificial element may be formed prior to the machining of the base surface or other treatment.

With the element 130 in place, repair material 150 is deposited atop the base surface 120 and element surface portion 136 to gradually build up to at least partially replace the lost material and, preferably, more than replace it. Deposition may be as described in US patent applications US 2004 172825, US 2004192826, 2004172827, and US 2005 205415 or otherwise. After deposition, the deposited material may be trimmed back to an external surface contour 152 corresponding to the contour of the lost material (FIG. 6) such as via machining and the element 130 may be destructively removed such as by chemical processes (e.g., dissolving, reacting, and the like) and/or thermal processes (e.g., melting, vaporizing, thermal decomposition, and the like). There may further be a restoration of coating to the affected area or to the blade overall. Additional variations may be as described in US patent application US 2004172825 or otherwise.

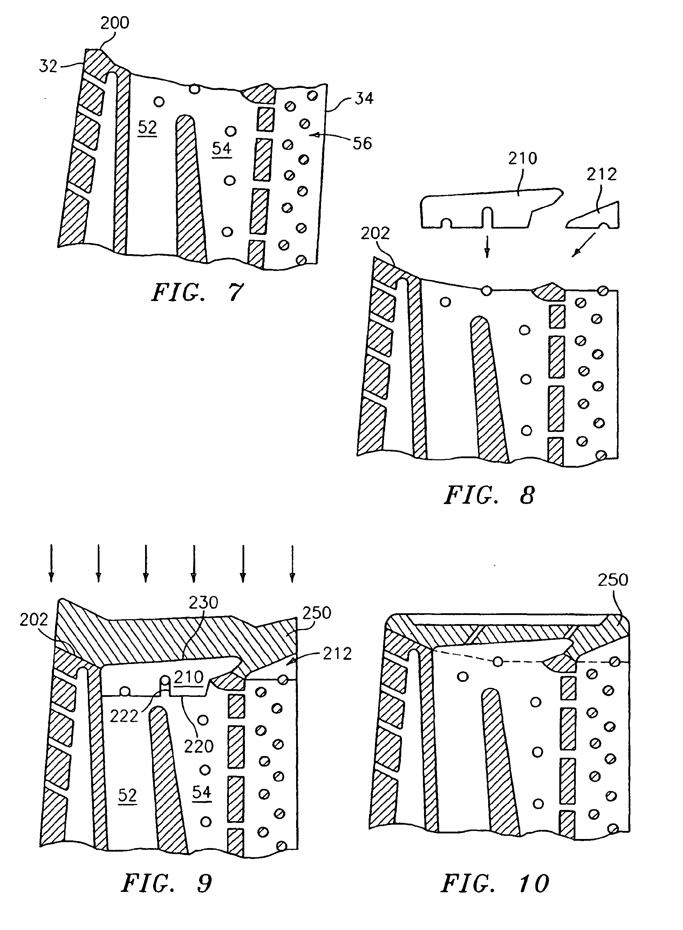

FIG. 7 shows damage to the tip area of the blade of FIG. 3. In the exemplary damage, a tip portion has been removed completely between the leading and trailing edges 32 and 34 penetrating to the cavities 52, and 54 and the slot 56, although other damage is possible. A damaged surface is shown as 200. Material may be removed from below the surface 200 to create one or more facets 202 (FIG. 8) or other prepared surfaces for receiving deposition material. In lieu of or in addition to use of *in situ* formed sacrificial elements, FIG. 8 shows pre-formed insert elements 210 and 212 which may be inserted (e.g., partially into the opening(s) to the cavities created at the damage site by the damage and/or by subsequent machining). Exemplary inserts are molded from the aforementioned salts (e.g., chlorides, fluorides or their mixtures) or other materials heretofore or subsequently used for to manufacture investment casting cores and shells (e.g., Al₂O₃). The inserts may be made using existing or subsequent core-manufacturing technology (e.g., molding and firing of ceramic materials).

FIG. 9 shows the inserts 210 and 212 in place. The exemplary insert 210 is a main insert for restoring the inboard surface of the end wall 92 along the cavities 52 and 54. The exemplary insert 212 is a trailing slot insert for restoring the inboard surface of the end wall along the slot 56. When associated with flat cavities having generally parallel sides, the inserts may be flat having corresponding side surfaces, a portion of each of which may engage an intact portion of the associated cavity-defining surface and a remaining portion of which protrudes. The side surfaces may have blind or through apertures corresponding to surface area enhancements (e.g., pedestals, posts, trip strips, wall portions and the like to be replaced or restored) Transverse to these side surfaces, the exemplary first insert 210 has a perimeter surface portion 220 dimensioned to be positioned within the associated cavities 52 and 54. For precisely registering the insert, the perimeter portion 220 may itself have portions such as 222 defining blind slots for engaging associated intact pedestals or other intact structure. The perimeter has a second portion 230 along the protruding portion of the insert for reforming the inboard surface of the wall 92 of FIG. 3. The second insert may be similxly formed. The inserts may be preformed in their final conditions in which case it may be appropriate to machine the damaged area down to a single predetermined configuration regardless of the extent of the damage as long as such damage is within a wide range appropriate for repair with such insert. Alternatively, however, inserts may initially be maximally sized or otherwise oversized. For example, an insert could be up to a near positive of an entire passageway network or portion thereof. With relatively minimal machining or other preparation of the damage site a portion of the insert may be cut off for installation. This portion may correspond to the portion necessary to protrude from the damaged area and a small portion sufficient to extend into the undamaged area and register the insert. The remainder of the insert could be discarded or even used for other repairs of other areas of the same or a similar airfoil.

FIG. 9 further shows repair material 250 deposited atop the base surface defined by the facets 202 and the surfaces of the inserts protruding from the airfoil. After deposition, as with the leading edge repair, the tip area may be machined to restore the final surface contour of the airfoil, including milling of the tip pocket and drilling of the passageways 94. The insert may be removed and additional processing (if any) performed.

One or more embodiments of the present invention have been described. Nevertheless, it will be understood that various modifications may be made without departing from scope of the invention. For example, although particularly useful with fan blades, the methods may be applied to other blades and other turbine engine parts and non-turbine parts. Details of the particular turbine engine part or other piece and the particular wear or damage suffered may influence details of any given restoration. Accordingly, other embodiments are within the scope of the following claims.

## Claims

1. A method for restoring a component (22) having an internal space (50, 52, 54, 56) and which has lost first material from a damage site (96 200) comprising:
placing at least a first surface portion (132,220) of a sacrificial element (130,210,212) within the internal space;
depositing a repair material (150, 250) at least partially in place of the first material; and removing the sacrificial element,
**characterised in that:**
the sacrificial element has a second surface portion (136, 230) having a shape effective to re-form an internal surface portion of the component bounding the internal space;
the placing causes the second surface portion to at least partially protrude from an intact portion of the component; and
the depositing the repair material includes depositing said repair material atop the second surface portion.

2. The method of claim 1 wherein:
the damage site extends to the internal space.

3. The method of claim 1 or 2 wherein:
the sacrificial element second surface portion (136, 230) defines at least one internal feature selected from the group consisting of pedestals, posts, and trip stripes.

4. The method of any preceding claim wherein:
the method further comprises removing additional material at least partially from the damage site to create a base surface (202); and
the depositing deposits said repair material (150, 250) atop the base surface at least partially in place of the first material and the additional material.

5. The method of any preceding claim wherein:
said deposited repair material (150, 250) in major part replaces said first material.

6. The method of any preceding claim wherein:
the component (22) is an internally-cooled gas turbine engine turbine section element.

7. The method of any preceding claim wherein said repair material (150, 250) is selected from the group consisting of Ni-, Co-, Fe-, or Ti-based superalloys.

8. The method of any preceding claim wherein said component (22) comprises a substrate material selected from the group consisting of Ni-, Co-, Fe-, or Ti-based superalloys.

9. The method of any preceding claim wherein the component (22) is a blade having an airfoil (24) and the damage site (96) is along a leading edge (32) of the airfoil.

10. The method of any of claims 1 to 8 wherein the component (22) is a blade having an airfoil (24) and the damage site (200) is along a tip (30) of the airfoil.

11. The method of any of claims 1 to 8 wherein the component (22) is a blade having an airfoil (24) and the damage site is along a trailing edge (34) of the airfoil.

12. The method of any of claims 1 to 8 wherein the component (22) is a blade having a platform (28) and an airfoil (24) and the damage site is along the platform.

13. The method of any preceding claim wherein the first material is lost to a depth of at least 2.0 mm.

14. The method of any preceding claim wherein said depositing comprises at least one of: plasma spray deposition; high velocity oxy-fuel (HVOF) deposition; low pressure plasma spray (LPPS) deposition; and electron beam physical vapor deposition (EB PVD).

15. The method of any preceding claim further comprising:
machining deposited repair material (150, 250) to restore an external contour of the component (22).

16. The method of any preceding claim wherein the placing comprises forming in situ.

17. The method of any of claims 1 to 15 wherein the placing comprises trimming a pre-formed insert (130, 210, 212).

18. The method of claim 17 further comprising forming the insert by molding.

19. The method of any preceding claim wherein the removing comprises at least one of chemically removing and thermally removing.

20. A sacrificial insert (210) for restoring a turbine airfoil element (22) having an internal space (50, 52, 54, 56) comprising:
a first surface portion (220) for registering the insert with an intact internal surface (202) of the turbine airfoil element; and
**characterised in that**
a second surface portion (230) having a shape effective to re-form an internal surface portion of the element bounding the internal space;
the insert is arranged such that the second surface portion at least partially protrudes from an intact portion of the turbine airfoil element when, in use, the first surface portion is registered with the intact internal surface.

21. The insert of claim 20 consisting essentially of: one or more salts; or one or more ceramics.

22. The insert of claim 20 or 21 consisting in major part of one or more salts selected from the group consisting of chlorides and fluorides.

23. The insert of claim 20 or 21 consisting in major part of alumina.

24. The insert of any of claims 20 to 23 wherein:
the first and second surface portions include associated portions of pressure and suction side faces of the insert.

25. The insert of any of claims 20 to 24 wherein:
the first and second surface portions define one or more internal surface enhancements.

## Patentansprüche

1. Verfahren zur Wiederaufbereitung einer Komponente (22), die einen internen Raum (50, 52, 54, 56) aufweist und welche erstes Material von einer Schadensseite (96, 200) verloren hat, umfassend:
Platzieren zumindest eines ersten Flächenbereichs (132, 220) eines Opferelements (130, 210, 212) innerhalb des internen Raums;
Abscheiden eines Reparaturmaterials (150, 250) zumindest teilweise anstelle des ersten Materials; und
Entfernen des Opferelements,
**dadurch gekennzeichnet, dass:**
das Opferelement einen zweiten Flächenbereich (136, 230) aufweist, der eine Form aufweist, die dazu ausgebildet ist, einen internen Flächenbereich der Komponente, der den internen Raum begrenzt, umzugestalten;
wobei das Platzieren den zweiten Flächenbereich dazu veranlasst, zumindest teilweise von einem intakten Bereich der Komponente hervorzustehen; und
wobei das Ablegen des Reparaturmaterials das Ablegen des Reparaturmaterials oben auf den zweiten Flächenbereich beinhaltet.

2. Verfahren nach Anspruch 1, wobei:
die Schadensseite sich zu dem internen Raum erstreckt.

3. Verfahren nach Anspruch 1 oder 2, wobei:
der zweite Flächenbereich (136, 230) des Opferelements zumindest ein internes Merkmal aufweist, das aus der Gruppe ausgewählt ist, die aus Absätzen, Stäben, und Nockenstreifen besteht.

4. Verfahren nach einem der vorangehenden Ansprüche, wobei:
das Verfahren des Weiteren das Entfernen von Zusatzmaterial zumindest teilweise von der Schadensseite umfasst, um eine Basisfläche (202) zu erzeugen; und
das Ablegen das Reparaturmaterial (10, 250) oben auf der Basisfläche zumindest teilweise anstelle des ersten Materials und des Zusatzmaterials ablegt.

5. Verfahren nach einem der vorangehenden Ansprüche, wobei:
das abgelegte Reparaturmaterial (150, 250) im Hauptteil das erste Material ersetzt.

6. Verfahren nach einem der vorangehenden Ansprüche, wobei:
die Komponente (22) ein intern gekühltes Gasturbinenmaschinen-Turbinenbereichselements ist.

7. Verfahren nach einem der vorangehenden Ansprüche, wobei das Reparaturmaterial (150, 250) aus der Gruppe ausgewählt ist, die aus Ni-, Co-, Fe-, oder Ti-basierten Superlegierungen besteht.

8. Verfahren nach einem der vorangehenden Ansprüche, wobei die Komponente (22) ein Substratmaterial umfasst, das aus der Gruppe ausgewählt ist, die aus Ni-, Co-, Fe-, oder Ti-basierten Superlegierungen besteht.

9. Verfahren nach einem der vorangehenden Ansprüche, wobei die Komponente (22) eine Laufschaufel ist, die ein Strömungsprofil (24) aufweist, und wobei die Schadensseite (56) entlang einer Vorderkante (32) des Strömungsprofils ist.

10. Verfahren nach einem der Ansprüche 1 bis 8, wobei die Komponente (22) eine Laufschaufel ist, die ein Strömungsprofil (24) aufweist, und wobei die Schadensseite (200) entlang einer Spitze (30) des Strömungsprofils ist.

11. Verfahren nach einem der Ansprüche 1 bis 8, wobei die Komponente (22) eine Laufschaufel ist, die ein Strömungsprofil (24) aufweist, und wobei die Schadensseite entlang einer Hinterkante (34) des Strömungsprofils ist.

12. Verfahren nach einem der Ansprüche 1 bis 8, wobei die Komponente (22) eine Laufschaufel ist, die eine Plattform (28) und ein Strömungsprofil (24) aufweist, und wobei die Schadensseite entlang der Plattform ist.

13. Verfahren nach einem der vorangehenden Ansprüche, wobei das erste Material zu einer Tiefe von zumindest 2,0 mm verschwunden ist.

14. Verfahren nach einem der vorangehenden Ansprüche, wobei das Abscheiden zumindest eines umfasst aus:
Plasmasprühabscheiden; Hochgeschwindigkeits-Flammspritzabscheiden (HVOF); Niederdruck-Plasmasprühabscheiden (LPPS); und physikalisches Elektronstrahl-Dampfabscheiden (EB PVD).

15. Verfahren nach einem der vorangehenden Ansprüche, des Weiteren umfassend:
Bearbeiten des abgelegten Reparaturmaterials (150, 250), um eine äußere Kontur der Komponente (22) wiederherzustellen.

16. Verfahren nach einem der vorangehenden Ansprüche, wobei das Platzieren in-Situ-Formen umfasst.

17. Verfahren nach einem der Ansprüche 1 bis 15, wobei das Platzieren das Trimmen eines vorgeformten Einsatzes (130; 210, 212) umfasst.

18. Verfahren nach Anspruch 17, des Weiteren umfassend:
Formen des Einsatzes durch Formpressen.

19. Verfahren nach einem der vorangehenden Ansprüche, wobei das Entfernen zumindest eines von chemikalischem Entfernen und thermischem Entfernen umfasst.

20. Opfereinsatz (210) zur Wiederherstellung eines Turbinenströmungsprofilelements (220), das einen internen Raum (50; 52, 54, 56) aufweist, umfassend:
einen ersten Flächenbereich (220) zum Eingreifen des Einsatzes mit einer in-takten internen Fläche (202) des Turbinenströmungsprofilelements;
und **dadurch gekennzeichnet, dass**
ein zweiter Flächenbereich (230) eine Form aufweist, die dazu ausgebildet ist, einen internen Flächenbereich des Elements, das den internen Raum begrenzt, umzugestalten;
der Einsatz derart angeordnet ist, dass der zweite Flächenbereich zumindest teilweise von einem intakten Bereich des Turbinenströmungsprofilelements hervorsteht, wenn im Betrieb der erste Flächenbereich mit der intakten internen Fläche im Eingriff ist.

21. Einsatz nach Anspruch 20, im Wesentlichen bestehend aus:
einem oder mehreren Salzen; oder
einer oder mehreren Keramiken.

22. Einsatz nach Anspruch 20 oder 21, bestehend im Hauptteil aus einem oder mehr Salzen, die aus einer Gruppe ausgewählt sind, die aus Chloriden und Fluoriden besteht.

23. Einsatz nach Anspruch 20 oder 21, bestehend im Hauptteil aus Aluminium.

24. Einsatz nach einem der Ansprüche 20 bis 23, wobei:
der erste und der zweite Flächenbereich zugehörige Bereiche von Druck- und Saugseitenflächen des Einsatzes beinhalten.

25. Einsatz nach einem der Ansprüche 20 bis 24, wobei:
der erste und der zweite Flächenbereich eine oder mehrere interne Flächenerweiterungen aufweisen.

## Revendications

1. Procédé de restauration d'un composant (22) ayant un espace interne (50, 52, 54, 56) et qui a perdu un premier matériau d'un site de dommage (96, 200), comprenant :
la mise en place d'au moins une première portion de surface (132, 220) d'un élément sacrificiel (130, 210, 212) au sein de l'espace interne ;
le dépôt d'un matériau de réparation (150, 250) au moins partiellement à la place du premier matériau ; et
le retrait de l'élément sacrificiel,
**caractérisé en ce que** :
l'élément sacrificiel comporte une seconde portion de surface (136, 230) ayant une forme efficace pour reformer une portion de surface interne du composant délimitant l'espace interne ;
la mise en place amène la seconde portion de surface à dépasser au moins partiellement d'une portion intacte du composant ; et
le dépôt du matériau de réparation inclut le dépôt dudit matériau de réparation par-dessus la seconde portion de surface.

2. Procédé selon la revendication 1, dans lequel :
le site de dommage s'étend vers l'espace interne.

3. Procédé selon la revendication 1 ou 2, dans lequel :
la seconde portion de surface (136, 230) de l'élément sacrificiel définit au moins une particularité interne choisie dans le groupe constitué par des socles, des poteaux et des bandes de butée.

4. Procédé selon l'une quelconque des revendications précédentes, dans lequel :
le procédé comprend en outre le retrait du matériau additionnel au moins partiellement du site de dommage pour créer une surface de base (202) ; et
le dépôt dépose ledit matériau de réparation (150, 250) par-dessus la surface de base au moins partiellement à la place du premier matériau et du matériau additionnel.

5. Procédé selon l'une quelconque des revendications précédentes, dans lequel :
ledit matériau de réparation déposé (150, 250) remplace en majeure partie ledit premier matériau.

6. Procédé selon l'une quelconque des revendications précédentes, dans lequel :
le composant (22) est un élément de section de turbine d'une turbine à gaz à refroidissement interne.

7. Procédé selon l'une quelconque des revendications précédentes, dans lequel ledit matériau de réparation (150, 250) est choisi dans le groupe constitué par des superalliages à base de Ni, Co, Fe ou Ti.

8. Procédé selon l'une quelconque des revendications précédentes, dans lequel ledit composant (22) comprend un matériau de substrat choisi dans le groupe constitué par des superalliages à base de Ni, Co, Fe ou Ti.

9. Procédé selon l'une quelconque des revendications précédentes, dans lequel le composant (22) est une lame ayant un profil (24) et le site de dommage (96) est le long d'un bord d'attaque (32) du profil.

10. Procédé selon l'une quelconque des revendications 1 à 8, dans lequel le composant (22) est une lame ayant un profil (24) et le site de dommage (200) est le long d'une pointe (30) du profil.

11. Procédé selon l'une quelconque des revendications 1 à 8, dans lequel le composant (22) est une lame ayant un profil (24) et le site de dommage est le long d'un bord de fuite (34) du profil.

12. Procédé selon l'une quelconque des revendications 1 à 8, dans lequel le composant (22) est une lame ayant une plate-forme (28) et un profil (24) et le site de dommage est le long de la plate-forme.

13. Procédé selon l'une quelconque des revendications précédentes, dans lequel le premier matériau est perdu à une profondeur d'au moins 2,0 mm.

14. Procédé selon l'une quelconque des revendications précédentes, dans lequel ledit dépôt comprend au moins un élément parmi : un dépôt par projection au plasma ; un dépôt par projection thermique supersonique (HVOF pour « high velocity oxy-fuel » en anglais) ; un dépôt par projection au plasma basse pression (LPPS) ; et un dépôt physique en phase vapeur par faisceau d'électrons (EB PVD).

15. Procédé selon l'une quelconque des revendications précédentes, comprenant en outre :
l'usinage du matériau de réparation (150, 250) déposé pour restaurer un contour externe du composant (22).

16. Procédé selon l'une quelconque des revendications précédentes, dans lequel la mise en place comprend la formation *in situ*.

17. Procédé selon l'une quelconque des revendications 1 à 15, dans lequel la mise en place comprend le détourage d'un insert préformé (130, 210, 212).

18. Procédé selon la revendication 17, comprenant en outre la formation de l'insert par moulage.

19. Procédé selon l'une quelconque des revendications précédentes, dans lequel le retrait comprend au moins un élément parmi un retrait chimique et un retrait thermique.

20. Insert sacrificiel (210) permettant de restaurer un élément de profil de turbine (22) ayant un espace interne (50, 52, 54, 56), comprenant :
une première portion de surface (220) pour aligner l'insert avec une surface interne intacte (202) de l'élément de profil de turbine ; et
**caractérisé en ce que**
une seconde portion de surface (230) a une forme efficace pour reformer une portion de surface interne de l'élément délimitant l'espace interne ;
l'insert est agencé de sorte que la seconde portion de surface dépasse au moins partiellement d'une portion intacte de l'élément de profil de turbine lorsque, en utilisation, la première portion de surface est alignée avec la surface interne intacte.

21. Insert selon la revendication 20, essentiellement constitué d'un ou plusieurs sels, ou d'une ou plusieurs céramiques.

22. Insert selon la revendication 20 ou 21, constitué en majeure partie d'un ou plusieurs sels choisis dans le groupe constitué par les chlorures et les fluorures.

23. Insert selon la revendication 20 ou 21, constitué en majeure partie d'alumine.

24. Insert selon l'une quelconque des revendications 20 à 23, dans lequel :
les première et seconde portions de surface incluent des portions associées des faces latérales de pression et d'aspiration de l'insert.

25. L'insert selon l'une quelconque des revendications 20 à 24, dans lequel :
les première et seconde portions de surface définissent une ou plusieurs améliorations de surface interne.
